# EUROPÄISCHE PATENTSCHRIFT

(11) **EP 0 525 921 B1**
(45) Veröffentlichungstag und Bekanntmachung des Hinweises auf die Patenterteilung: **11.03.1998**
(21) Anmeldenummer: 92250174.7
(22) Anmeldetag: 03.07.1992
(51) Int. Cl.: H04L 1/08, H04L 9/00

(54) **Von der Quelle her sich wiederholende kryptologisch verschlüsselte Datenübertagung**
Data transmission with repetition, one of the messages being encrypted
Transmission de données avec répétition, un des messages étant crypté

(30) Priorität: 01.08.1991 DE 4125812
(43) Veröffentlichungstag der Anmeldung: 03.02.1993
(73) Patentinhaber: SIEMENS AKTIENGESELLSCHAFT, 80333 München (DE)
(72) Erfinder: Gückel, Hartmut, D-3150 Peine (DE)

(56) Entgegenhaltungen:
- EP-A- 0 295 897
- EP-A- 0 395 618
- DE-A- 3 117 089
- US-A- 4 599 723

## Beschreibung

Die Erfindung bezieht sich auf ein Verfahren zur signaltechnisch sicheren Datenübertragung zwischen einer signaltechnisch sicheren Quelle und einer signaltechnisch sicheren Senke unter Verwendung eines Datenübertragungssystems, über das die zu übertragenden Daten in Form von Datentelegrammen mindestens zweimal übertragen und senkeseitig auf Übereinstimmung geprüft werden.

Für die Steuerung sicherheitsrelevanter Prozeßgeschehen, beispielsweise des Stellwerksbetriebes im Eisenbahnwesen, werden üblicherweise signaltechnisch sichere Steuerungs- und Überwachungseinrichtungen verwendet. Dies sind Einrichtungen, die beim Auftreten eines Fehlers, der Auswirkungen haben könnte auf sicherheitsrelevante Ein- und/oder Ausgaben, zur sicheren Seite hin reagieren, indem sie z. B. einen zuvor ausgegebenen Fahrtbegriff zurücknehmen und das Anhalten eines Zuges veranlassen. Diese Steuereinrichtungen können in beliebiger Technik realisiert sein, beispielsweise in Relaistechnik oder in elektronischer Technik.

Die Steuerung großflächiger Prozeßgeschehen erfolgt vorzugsweise über dezentrale Prozeßsteuerelemente, die untereinander zur Realisierung der gemeinsamen Aufgabe, z. B. der Steuerung und Überwachung des Eisenbahnverkehrs, über Datenleitungen in Verbindung stehen. So bestehen z. B. elektronische Stellwerke aus einer Vielzahl von hierarchisch gegliederten in sich sicheren Rechnersystemen, die über Busse miteinander kommunizieren. Für das signaltechnisch sichere Steuern und Überwachen eines Prozeßgeschehens reicht es nicht aus, daß die an der Steuerung und Überwachung direkt beteiligten Prozeßelemente, also die einzelnen Rechnersysteme, jeweils signaltechnisch sicher aufgebaut sind; auch die Übertragung der Daten zwischen den einzelnen Rechnern sowie von und zu den Eingabe- und Überwachungseinrichtungen muß signaltechnisch sicher erfolgen. Zum signaltechnisch sicheren Übertragen von Daten zwischen einer Quelle und einer Senke ist es bekannt, diese Daten in Form von Datentelegrammen jeweils mehrfach, vorzugsweise zweimal, zu übertragen und senkeseitig auf Übereinstimmung zu prüfen. Nur wenn inhaltliche Übereinstimmung zwischen den jeweils zusammengehörigen Datentelegrammen gegeben ist, werden diese Daten senkeseitig akzeptiert und weiterverarbeitet. Die Datenübertragung erfolgt dabei entweder über getrennte Kanäle vorzugsweise gleichzeitig oder aber seriell über vorzugsweise einen einzigen Kanal.

Aus der DE 31 17 089 A1 ist eine Einrichtung zur gesicherten Fernübertragung von Binärdatenworten bekannt, bei der zum Zwecke der Erkennung von Datenverfälschungen auf dem Weg von einer Quelle zu einer Senke die Daten mehrkanalig erarbeitet und in Form von Datentelegrammen mehrfach übertragen werden. Die Senke akzeptiert die übermittelten Daten nur dann, wenn sie in den aus unterschiedlichen Kanälen stammenden Datentelegrammen inhaltlich übereinstimmen. Um den Aufwand für die Adressierung der Daten gering zu halten, werden in einem der Telegramme bestimmte Datenbits invertiert, wobei die jeweilige Anordnung dieser Bits innerhalb des Telegrammes die jeweilige Senke bezeichnet, für die die Daten bestimmt sind.

Neben der mehrkanaligen Übertragung von Daten ist es auch bekannt, die Daten quelleseitig mit einem nach einer bestimmten mathematischen Gesetzmäßigkeit gegebenen Sicherungsanhang zu versehen, der senkeseitig auf Zugehörigkeit zu den übermittelten Daten geprüft werden kann und über den einzelnen Bitfehler in den übermittelten Daten erkannt werden können. Ferner ist es bekannt, die paarweise übermittelten Daten jeweils antivalent darzustellen, um so zusätzliche Sicherheit gegen gleichartige Verfälschungen der Daten in den jeweils zusammengehörigen Telegrammen zu erzielen.

Die Bereitstellung eines signaltechnisch sicheren Datenübertragungssystem zwischen den jeweils zusammenwirkenden Quellen und Senken eines signaltechnisch sicheren Datenverarbeitungssystems ist außerordentlich kostenintensiv, insbesondere dann, wenn einzelne dieser Quellen und/oder Senken von den übrigen Quellen und Senken des Datenverarbeitungssystems räumlich abgesetzt unterzubringen sind. Dieses Datenübertragungssystem muß so ausgebildet sein, daß senkeseitig nicht erkennbare Datenverfälschungen ausgeschlossen werden können. Kommerzielle Datenübertragungssysteme waren bisher ungeeignet zur Datenübertragung zwischen den Komponenten einer signaltechnisch sicheren Datenverarbeitungsanlage, weil sie u. a. Übertragungsstrecken, Ein/Ausgabebausteine, Rechner, Speicher, Umsetzer und Verstärker beinhalten, deren Ausfallverhalten nicht bekannt ist und aus Kostengründen auch nicht analysiert werden kann.

Aufgabe der Erfindung ist es, ein Verfahren nach dem Oberbegriff des Patentanspruchs 1 anzugeben, das es gestattet, eine signaltechnisch sichere Datenübertragung über ein signaltechnisch nicht sicheres Datenübertragungssystem, vorzugsweise ein kommerzielles Kommunikationssystem, vorzunehmen.

Die Erfindung löst diese Aufgabe durch die Anwendung der kennzeichnenden Merkmale des Patentanspruches 1 auf das gattungsbildende Verfahren. Die nach ihrer Lehre vorgesehene Bildung statistisch voneinander unabhängiger Bitfolgen für die mehrfach zu übertragenden Daten stellt sicher, daß etwaige Störeinflüsse auf dem Übertragungssystem die jeweils zusammenwirkenden Datentelegramme nicht in gleicher Weise so verfälschen können, daß diese Verfälschungen senkeseitig nicht mehr sicher als solche erkannt werden können. Dabei genügt es, jeweils eines der z. B. zweifach zu übertragenden Datentelegramme in der im Anspruch 1 näher bezeichneten Weise umzusetzen. Die Ansprüche 2 und 3 benennen Maßnahmen zur Erzielung voneinander statistisch unabhängiger Bitfolgen.

Wenn nicht nur eines, sondern mehrere oder alle der jeweils zusammenwirkenden Datentelegramme umgesetzt werden sollen, ist es erforderlich, nach der Lehre des Anspruches 4 die jeweils zusammengehörigen Datentelegramme auf unterschiedliche Bitfolgen abzubilden; dies kann gemäß Anspruch 5 vorteilhaft durch Anwendung unterschiedlicher Verschlüsselungen auf die einzelnen Telegramme geschehen.

Muß damit gerechnet werden, daß in aufeinanderfolgenden Übertragungszyklen jeweils die gleichen Daten zu übertragen sind, so schlägt Anspruch 6 in vorteilhafter Weise vor, diese Daten quelleseitig vor ihrer Umsetzung bewußt zu verändern, so daß in aufeinanderfolgenden Datentelegrammen statistisch unabhängige Bitfolgen übertragen werden. Dieses Verändern kann nach der Lehre des Anspruches 7 z. B. dadurch geschehen, daß die einzelnen Datentelegramme mit einem unterschiedlichen Telegrammkennzeichen, z. B. einer fortlaufenden Nummer, versehen werden oder aber, daß sie gemäß Anspruch 8 Zeitangaben beinhalten, die zu einer Änderung des Dateninhaltes und damit zu unterschiedlichen statistischen Bitfolgen führen.

Die jeweils zusammengehörigen Datentelegramme können gemäß Anspruch 9 über getrennte oder gemäß Anspruch 10 seriell über einen gemeinsamen Übertragungskanal übertragen werden.

Die Erfindung ist nachstehend unter Bezugnahme auf die Zeichnung näher erläutert.

Die Zeichnung zeigt in
- Figur 1: schematisch eine Datenverarbeitungsanlage mit einer Quelle und einer Senke, die über ein herkömmliches, nicht signaltechnisch sicheres Datenübertragungssystem miteinander verbunden sind, in
- Figur 2: eine entsprechende Anlagenkonfiguration mit einer mehrkanaligen signaltechnisch sicheren Datenübertragung nach dem Stand der Technik und in
- Figur 3: eine entsprechende Anlage mit einkanaliger serieller Datenübertragung.

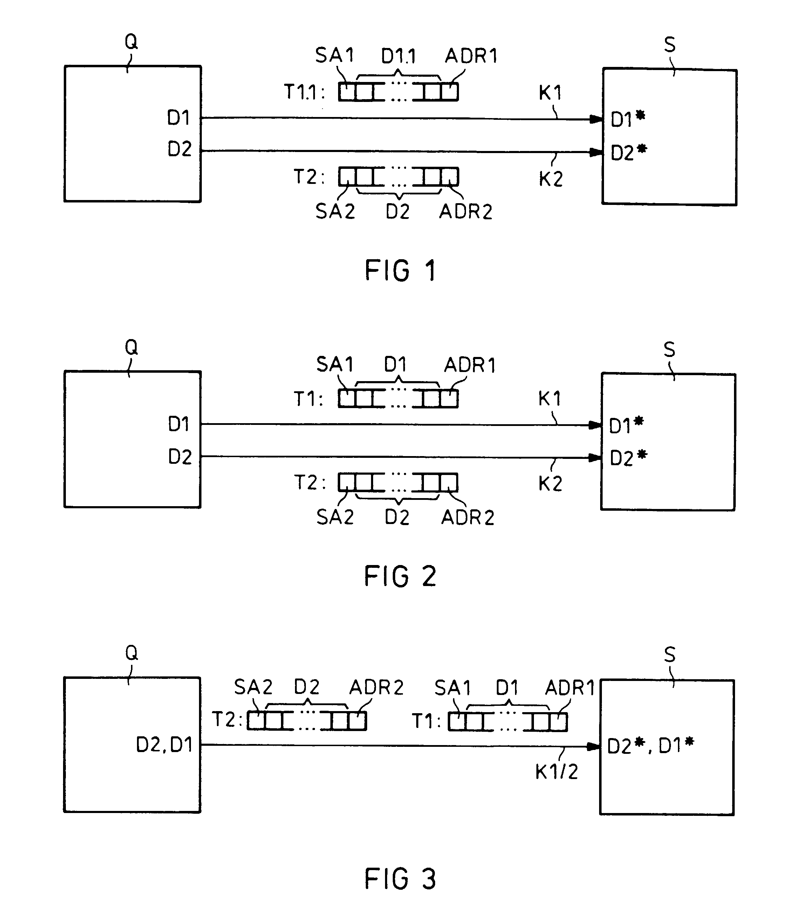

In den Figuren der Zeichnung werden für einander entsprechende Dinge die gleichen Bezugszeichen verwendet. Die Quelle Q und die Senke S stehen stellvertretend für eine Vielzahl von miteinander in Verbindung stehenden Quellen und Senken, wobei die Datenübertragung nicht nur in einer, sondern über das gleiche Übertragungssystem auch in der Gegenrichtung vonstatten gehen kann. Bei der nach dem Stand der Technik ausgebildeten Anlagenkonfiguration gemäß Figur 2 hat die Quelle Q an die Senke S Daten zu übertragen, die durch eine bestimmte Bitfolge dargestellt sein sollen. Diese Daten werden in der Quelle Q zweikanalig signaltechnisch sicher erarbeitet und als inhaltsgleiche Datensätze D1 und D2 zur Übertragung bereitgestellt. Die beiden Datensätze müssen nicht notwendigerweise identisch dargestellt sein; sie können z. B. auch aus antivalenten Bitfolgen bestehen. Wichtig ist nur, daß sie inhaltsgleich sind und daß der Senke bekannt ist, nach welchen Gesetzmäßigkeiten diese beiden Datenfolgen gebildet wurden. Die beiden Datenfolgen werden als Datentelegramme T1 und T2 vorzugsweise gleichzeitig über getrennte Kanäle K1 und K2 eines sicheren Datenübertragungssystems zur Senke S übertragen. Jedes Datentelegramm besteht aus einer Adresse ADR1 bzw. ADR2 zur Kennzeichnung des jeweiligen Empfangsports der Senke, dem zu übertragenden Datensatz D1 bzw. D2 und gegebenenfalls einem Sicherungsanhang SA1 bzw. SA2 zur senkeseitigen Detektion von Einzelbitfehlern. Die Senke ermittelt aus den übermittelten Datentelegrammen T1 und T2 die in diesen enthaltenen Datensätze D1* und D2* und vergleicht diese auf inhaltliche Übereinstimmung. Nur wenn diese inhaltliche Übereinstimmung gegeben ist, werden die Datensätze akzeptiert und der weiteren Datenverarbeitung zugänglich gemacht.
Verfälschungen auf der Übertragungsstrecke erkennt die Datensenke aus dem Vergleich der beiden Datensätze. Als fehlerhaft erkannte Daten werden nicht akzeptiert; gegebenenfalls wird eine erneute Datenübertragung angefordert und der Empfang dieser Daten abgewartet, bevor die Daten dann nach positivem Vergleich weitergegeben werden. Mit nicht erkennbaren gleichartigen Fehlern in den zweikanalig übermittelten Datensätzen ist nicht zu rechnen, weil an der Übertragung der Daten neben der eigentlichen Übertragungsstrecke annahmegemäß ausschließlich Ein/Ausgabebaugruppen beteiligt sind, deren Funktionsverhalten laufend z. B. durch Rücklesen der übermittelten Daten oder aber durch zugeführte Prüfdaten auf ordnungsgerechtes Funktionsverhalten geprüft wird, bei denen also - solange die Prüfvorgänge positiv verlaufen - nicht mit nicht erkennbaren Fehlern zu rechnen ist. Bei der Ausführungsform einer Datenverarbeitungsanlage gemäß Figur 3, die ebenfalls zum Stand der Technik gehört, erfolgt die Übertragung der beiden jeweils zusammengehörigen Datentelegramme D1 und D2 über einen gemeinsamen Kanal K1/2, beispielsweise eine geschirmte Leitung oder ein Lichtwellenleiterkabel. Die beiden Datentelegramme werden seriell übertragen und senkeseitig auf die gleiche Art und Weise behandelt wie die auf getrennten Kanälen empfangenen Datentelegramme nach Figur 2.

Das Ausführungsbeispiel der Figur 1 dient der Darstellung des erfindungsgemäßen Verfahrens zur signaltechnisch sicheren Datenübertragung unter Verwendung eines signaltechnisch nicht sicheren Datenübertragungssystems. Quelle und Senke sind wiederum signaltechnisch sicher ausgeführt, beispielsweise durch jeweils ein aus zwei Rechnern bestehendes signaltechnisch sicheres Rechnersystem; die Übertragung der Daten erfolgt über ein signaltechnisch nicht sicheres Übertragungssystem, beispielsweise ein kommerzielles Übertragungssystem, bei dem das Ausfallverhalten der an der Speicherung, Umsetzung und Übertragung beteiligten Schaltmittel weitestgehend unbekannt ist. Während die Übertragung z. B. des Datentelegrammes T2 über den Kanal K2 in schon erläuterter Art und Weise erfolgt, ist für die Übertragung des Datensatzes D1 vorgesehen, dessen Bitfolge durch ein an sich bekanntes Umsetzverfahren in eine Bitfolge D1.1 umzusetzen, die statistisch unabhängig ist von Bitfolge des Datensatzes D1 und der Bitfolge des Telegrammes T2. Erreicht werden kann dies durch Anwendung eines an sich bekannten, vorzugsweise kryptologischen Verschlüsselungsverfahrens auf die Bitfolge des Datensatzes D1. Selbstverständlich muß die Gesetzmäßigkeit des quelleseitig zur Anwendung kommenden Verschlüsselungsverfahrens der Senke bekannt sein, damit dort ein Vergleich der jeweils zusammengehörigen Telegramme auf inhaltliche Übereinstimmung durchgeführt werden kann.

Die so verschlüsselte oder sonstwie modifizierte Bitfolge wird unter der Adresse ADR1 als Telegramm T1.1 über den Kanal K1 übermittelt. Das Verschlüsselungsverfahren ist so zu wählen, daß die beiden zu übertragenden Telegramme T1.1 und T2 statistisch voneinander unabhängige unterschiedliche Bitfolgen aufweisen. Bei diesen voneinander verschiedenen und unabhängigen Bitfolgen kann davon ausgegangen werden, daß beliebige Fehler, die beispielsweise durch nicht ordnungsgerecht arbeitende Ein/Ausgabespeicher oder Umsetzer im nicht sicherungstechnischen Datenübertragungssystem bedingt sind, das verschlüsselte Telegramm nicht so verändern können, daß senkeseitig bei der Entschlüsselung ein Datensatz D1* entsteht, der identisch ist mit einem ebenfalls durch Fehler verfälschten Datensatz D2*. Geeignete Verschlüsselungsverfahren sind beispielsweise Verschlüsselungen nach DES und FEAL (NTT Review, Vol. 2, November 1990, Seiten 117-127). Die Bildung und Übertragung statistisch unabhängiger Bitfolgen ist erst möglich bei Datensätzen ab einer bestimmten Mindestlänge, die abhängig ist vom jeweils zur Anwendung kommenden Verschlüsselungverfahren; ggf. müssen kürzere Datensätze zu längeren Datensätzen aufgefüllt werden, um den gewünschten Effekt eintreten zu lassen.

Durch Wahl eines geeigneten Verschlüsselungsverfahrens ist sicherzustellen, daß auch die verschlüsselten Telegramme von Datensätzen, die sich nur in einem oder einigen wenigen Bits voneinander unterscheiden, durch voneinander unabhängige Bitfolgen dargestellt sind. Dies führt zu einer weiteren Steigerung der Sicherheit gegen nicht erkennbare Datenübertragungsfehler. Auch dann, wenn sich aufeinanderfolgend zu übertragende Daten nicht voneinander unterscheiden, ist es vorteilhaft, diese Daten vor der Verschlüsselung zu verändern, beispielsweise durch Hinzufügen einer laufenden Nummer oder der jeweiligen Übertragungszeit. Hierdurch entstehen markant voneinander verschiedene Bitfolgen trotz gleichen Datensatzes, wodurch der oder die Kanäle mit unterschiedlichen statistischen Datenfolgen beaufschlagt und die an der Übertragung der Datenfolgen beteiligten Bauelemente kontinuierlich auf ordnungsgemäßes Funktionsverhalten geprüft werden.

Für die signaltechnisch sichere Datenübertragung über das signaltechnisch nicht sichere Datenübertragungssystem ist es ausreichend, nur jeweils einen der jeweils zusammenwirkenden Datensätze zu verschlüsseln und den oder die anderen Datensätze in bekannter Weise entweder auf einem anderen Kanal oder auf dem gleichen Kanal seriell zu übertragen, wobei an die zu übertragenden Datentelegramme durchaus auch Sicherungsanhänge zum Erkennen von Einzelbitfehlern angehängt sein können. Es ist aber auch möglich, auch den zweiten und alle weiteren Datensätze eines Datenblockes zu verschlüsseln und verschlüsselt zu übertragen. In diesem Fall muß die Verschlüsselung des/der weiteren Datensätze durch einen anderen Algorithmus oder eine andere Methode erfolgen als die des ersten Datensatzes, damit die jeweils zusammengehörigen verschlüsselten Datentelegramme durch statistisch voneinander unabhängige Bitfolgen dargestellt sind.

Die Ver- und die Entschlüsselung der von der Quelle generierten bzw. von der Senke empfangenen Datentelegramme kann sowohl hard- als auch softwaremäßig erfolgen, wobei allerdings sicherzustellen ist, daß diese Verschlüsselung bzw. die Entschlüsselung sicherungstechnisch erfolgt, d. h. etwaige Fehler beim Verschlüsseln oder Entschlüsseln sicher erkannt werden können. Dies mag z. B. durch Zwischenspeichern der verschlüsselten Telegramme vor ihrer Ausgabe in Speichern, Entschlüsseln und Zurücklesen der dort abgelegten Telegramme geschehen oder senkeseitig durch mehr oder weniger laufende Funktionsprüfung der Empfangsspeicher und der Entschlüsselungseinrichtungen. Die Übertragung selbst kann, wie beim Stand der Technik, einkanalig seriell oder mehrkanalig parallel erfolgen. Die Anzahl der miteinander kommunizierenden Datenquellen und Datensenken kann beliebig groß sein; die Entfernung zwischen ihnen kann ebenfalls beliebig groß sein, wobei in die Übertragungsstrecke auch Rechner, Speicher, Verstärker, Übertragungsstrecken oder sonstige Bauelemente einbezogen sein können, die nicht unbedingt signaltechnisch sicher ausgeführt sein müssen.

Eine sichere Datenübertragung läßt sich auch erreichen, wenn anstelle der Verschlüsselung eines Datensatzes und Übertragung eines originären und eines verschlüsselten Telegramms quelleseitig mindestens eines der Telegramme gegenüber dem anderen Telegramm verändert und beide Telegramme dann nach dem gleichen Algorithmus verschlüsselt übertragen werden. Als Veränderung eines der Datensätze kommt vorzugsweise eine Ergänzung der Datenfolge durch Einbeziehung einer Kennung wie beispielsweise einer Telegramm- oder Teiltelegrammnummer in Frage. Selbstverständlich müssen die quelleseitig vorgenommenen Modifizierungen eines Datensatzes senkeseitig zum Vergleich der übermittelten Telegramme bekannt sein.

Abweichend von dem zuvor erläuterten Ausführungsbeispiel, bei dem senkeseitig das verschlüsselt übermittelte Datentelegramm vor dem Vergleich mit dem originären Telegramm wieder entschlüsselt wurde, ist es auch möglich, auf der Senkeseite das originär übermittelte Telegramm nach dem gleichen Algorithmus wie das quelleseitig verschlüsselte Telegramm zu verschlüsseln und die beiden verschlüsselten Telegramme auf Übereinstimmung zu vergleichen.

Die Erfindung gestattet es, für das Zusammenwirken dezentraler signaltechnisch sicherer Prozeßelemente auf ein signaltechnisch nicht sicheres Datenübertragungssystem, insbesondere ein kommerzielles Datenübertragungssystem, zurückzugreifen und über dieses nicht sicherungstechnische Übertragungssystem eine signaltechnisch sichere Datenübertragung zu bewerkstelligen. Damit werden die Entstehungskosten derartiger dezentraler Einrichtungen erheblich gesenkt gegenüber Anordnungen, die ein signaltechnisch sicheres Datenübertragungssystem erfordern und gegebenenfalls wird dann erst der Einsatz derartiger Prozeßsteuerungen ermöglicht.

## Patentansprüche

1. Verfahren zur signaltechnisch sicheren Datenübertragung zwischen einer signaltechnisch sicheren Quelle (Q) und einer signaltechnisch sicheren Senke (S) unter Verwendung eines Datenübertragungssystems, über das die zu übertragenden Daten in Form von Datentelegrammen mindestens zweimal übertragen und senkeseitig auf Übereinstimmung geprüft werden, wobei mindestens eines dieser Datentelegramme quelleseitig verschlüsselt und senkeseitig wieder entschlüsselt wird,
**dadurch gekennzeichnet,**
daß jeweils mindestens eines (T1) der Datentelegramme (T1, T2) eines jeden aus mehreren Datentelegrammen bestehenden Telegrammblockes quelleseitig in sicherungstechnischer Weise in ein Datentelegramm (T1.1) mit einer von der Bitfolge des ursprünglichen Datentelegramms (T1) und der Bitfolge (D2) des oder der übrigen Datentelegramme (T2) des Telegrammblockes statistisch unabhängigen Bitfolge (D1) umgesetzt und über ein signaltechnisch nicht sicheres Datenübertragungssystem (K1, K2) zur Senke (S) übertragen wird und daß dort zum Vergleich der einander entsprechenden Datentelegramme (T1.1, T2) in sicherungstechnischer Weise entweder aus der umgesetzten Bitfolge (D1) die ursprüngliche Bitfolge zurückgewonnen oder die Bitfolge (D2) des oder der anderen Datentelegramme des betreffenden Telegrammblockes in eine Bitfolge umgesetzt wird, die der Bitfolge des quelleseitig umgesetzten Datentelegrammes (D1) entspricht.

2. Verfahren nach Anspruch 1,
**dadurch gekennzeichnet,**
daß das Umsetzen der Bitfolge eines Datentelegrammes durch Anwendung eines kryptologischen Verschlüsselungsverfahrens auf die umzusetzende Bitfolge geschieht.

3. Verfahren nach Anspruch 2,
**dadurch gekennzeichnet,**
daß ein Abbildungsverfahren zur Anwendung kommt wobei mindestens eines der Datentelegramme jedes Telegrammblokkes durch Modifikation mindestens eines Datenbits verändert wird und daß auf alle Datentelegramme eines Telegrammblockes jeweils das gleiche Abbildungsverfahren angewendet wird.

4. Verfahren nach Anspruch 1,
**dadurch gekennzeichnet,**
daß beim Umsetzen auch des oder der anderen Datentelegramme eines Telegrammblockes für diese ein Abbildungsverfahren zur Anwendung kommt, das verschieden ist von dem zur Umsetzung der übrigen Datentelegramme des Telegrammblockes angewandten Abbildungsverfahren.

5. Verfahren nach Anspruch 2 oder 4,
**dadurch gekennzeichnet,**
daß bei Verschlüsselung auch der anderen Datentelegramme (T2) eines Telegrammblockes diese nach einem von der Verschlüsselung der übrigen Datentelegramme (T1.1) des Telegrammblockes verschiedenen Schlüssel erfolgt.

6. Verfahren nach Anspruch 1,
**dadurch gekennzeichnet,**
daß zur Übertragung inhaltsgleicher Daten in aufeinanderfolgenden Übertragungszyklen die zugehörigen Datentelegramme quelleseitig vor ihrer Umsetzung mindestens partiell verändert werden.

7. Verfahren nach Anspruch 6,
**dadurch gekennzeichnet,**
daß die Veränderung der Datentelegramme durch Einbeziehen unterschiedlicher Telegrammkennzeichen in die aufeinanderfolgend zu übertragenden Datentelegramme vorgenommen wird.

8. Verfahren nach Anspruch 6,
**dadurch gekennzeichnet,**
daß die Veränderung der Datentelegramme durch Einbeziehen von Zeitangaben in die aufeinanderfolgend zu übertragenden Datentelegramme vorgenommen wird.

9. Verfahren nach einem der Ansprüche 1 bis 8,
**dadurch gekennzeichnet,**
daß die Datentelegramme (T1.1, T2) eines jeden Telegrammblokkes über getrennte Übertragungskanäle (K1, K2) übertragen werden.

10. Verfahren nach einem der Ansprüche 1 bis 8,
**dadurch gekennzeichnet,**
daß die Datentelegramme eines jeden Telegrammblockes seriell über einen gemeinsamen Übertragungskanal (K1/K2) übertragen werden.

## Claims

1. Method for data transmission, which is reliable in terms of signalling techniques, between a source (Q), which is reliable in terms of signalling techniques, and a sink (S), which is reliable in terms of signalling techniques, with use of a data transmission system by way of which the data which is to be transmitted is transmitted at least twice in the form of data telegrams and is tested on the sink side for consistency, in which case at least one of these data telegrams is encoded on the source side and is decoded again on the sink side, characterised in that in each case at least one (T1) of the data telegrams (T1, T2) of each telegram block, consisting of a plurality of data telegrams, is converted, on the source side in a manner that affords reliability technically, into a data telegram (T1.1) having a bit sequence (D1) statistically independent of the bit sequence of the original data telegram (T1) and of the bit sequence (D2) of the data telegram (T2) or the other data telegrams (T2) of the telegram block, and is transmitted by way of a data transmission system (K1, K2), which is not reliable in terms of signalling techniques, to the sink (S), and in that there for the purpose of comparing the data telegrams (T1.1, T2), which correspond to each other, in a manner that affords reliability technically either the original bit sequence is recovered from the converted bit sequence (D1), or the bit sequence (D2) of the data telegram or the other data telegrams of the relevant telegram block is converted into a bit sequence which corresponds to the bit sequence of the data telegram (D1) converted on the source side.

2. Method according to claim 1, characterised in that the conversion of the bit sequence of a data telegram is effected by applying a cryptological encoding method to the bit sequence which is to be converted.

3. Method according to claim 2, characterised in that a mapping method is applied, in which at least one of the data telegrams of each telegram block is changed by modification of at least one data bit, and in that the same mapping method is applied, in each case, to all of the data telegrams of a telegram block.

4. Method according to claim 1, characterised in that when also converting the data telegram or the other data telegrams of a telegram block for these a mapping method is used that is different from the mapping method applied for the purpose of converting the other data telegrams of the telegram block.

5. Method according to claim 2 or 4, characterised in that when also encoding the other data telegrams (T2) of a telegram block this is effected according to a code which is different from the coding of the other data telegrams (T1.1) of the telegram block.

6. Method according to claim 1, characterised in that in order to transmit data, which has the same content, in successive transmission cycles the associated data telegrams are changed at least in part on the source side before they are converted.

7. Method according to claim 6, characterised in that the change is made to the data telegrams by incorporating different telegram identifiers in the data telegrams which are to be successively transmitted.

8. Method according to claim 6, characterised in that the change is made to the data telegrams by incorporating time details in the data telegrams which are to be successively transmitted.

9. Method according to one of the claims 1 to 8, characterised in that the data telegrams (T1.1, T2) of each telegram block are transmitted by way of separate transmission channels (K1, K2).

10. Method according to one of the claims 1 to 8, characterised in that the data telegrams of each telegram block are transmitted serially by way of a common transmission channel (K1/K2).

## Revendications

1. Procédé pour transmettre des données de manière sûre du point de vue de la technique des signaux entre une source (Q) sûre du point de vue de la technique des signaux et un récepteur (S) sûr du point de vue de la technique des signaux, en utilisant un système de transmission de données par l'intermédiaire duquel les données à transmettre sont transmises au moins deux fois sous forme de télégrammes de données et leur coïncidence vérifiée du côté du récepteur, au moins l'un de ces télégrammes de données étant codés à la source et à nouveau décodés au récepteur, caractérisé en ce qu'au moins l'un (T1) des télégrammes (T1, T2) de données d'un bloc de télégrammes constitué de plusieurs télégrammes de données est transformé à la source, de manière sûre du point de vue technique, en un télégramme (T1.1) de données ayant une séquence (D1) de bits statistiquement indépendante de la séquence de bits du télégramme (T1) de données initial et de la séquence (D2) de bits du télégramme (T2) de données ou des télégrammes de données restants du bloc de télégrammes et transmis au récepteur (S) par l'intermédiaire d'un système (K1, K2) de transmission de données qui n'est pas sûr du point de vue de la technique des signaux et en ce que, pour comparer les télégrammes (T1.1, T2) de données qui se correspondent l'un à l'autre, on y récupère de manière sûre du point de vue technique, à partir de la séquence (D1) de bits transformée, la séquence de bits initiale ou l'on transforme la séquence (D2) de bits de l'un ou de l'autre télégramme de données du bloc de télégrammes concerné en une séquence de bits qui correspond à la séquence de bits du télégramme (D1) de données transformé à la source.

2. Procédé suivant la revendication 1, caractérisé en ce que la transformation de la séquence de bits d'un télégramme de données s'effectue en appliquant un procédé de codage cryptologique à la séquence de bits à transformer.

3. Procédé suivant la revendication 2, caractérisé en ce que l'on utilise un procédé de reproduction, au moins l'un des télégrammes de données de chaque bloc de télégrammes étant modifié par une modification d'au moins un bit de données, et en ce que l'on applique le même procédé de reproduction à tous les télégrammes de données d'un bloc de télégramme.

4. Procédé suivant la revendication 1, caractérisé en ce que lorsque l'on transforme aussi l'autre télégramme de données ou les autres télégrammes de données d'un bloc de télégramme, on utilise pour ce télégramme ou pour ces télégrammes un procédé de reproduction qui est différent du procédé de reproduction employé pour la transformation des télégrammes de données restants du bloc de télégramme.

5. Procédé suivant la revendication 2 ou 4, caractérisé en ce que, lorsque l'on code aussi les autres télégrammes (T2) de données d'un bloc de télégramme, ce codage s'effectue suivant un code différent du codage des autres télégrammes (T1.1) de données restants du bloc de télégramme.

6. Procédé suivant la revendication 1, caractérisé en ce que, pour transmettre des données de même contenu pendant des cycles de transmission successifs, les télégrammes de données associés au moins partiellement à la source avant leur transformation.

7. Procédé suivant la revendication 6, caractérisé en ce que la modification des télégrammes de données s'effectue en intégrant divers signes caractéristiques des télégrammes aux télégrammes de données à transmettre successivement.

8. Procédé suivant la revendication 6, caractérisé en ce que la modification des télégrammes de données s'effectue en intégrant des indications de temps aux télégrammes de données à transmettre successivement.

9. Procédé suivant l'une des revendications 1 à 8, caractérisé en ce que les télégrammes (T1.1,T2) de données de chacun des blocs de télégramme sont transmis par l'intermédiaire de canaux (K1, D2) de transmission distinct.

10. Procédé suivant l'une des revendications 1 à 8, caractérisé en ce que les télégrammes de données de chacun des blocs de télégrammes sont transmis de manière sérielle par l'intermédiaire d'un canal (K1/K2) de transmission commun.
